# EUROPEAN PATENT APPLICATION

(11) **EP 1 531 556 A1**
(43) Date of publication of application: **18.05.2005**
(21) Application number: 03792655.7
(22) Date of filing: 07.08.2003
(51) Int. Cl.: H04B 7/005

(54) **DATA RECEPTION DEVICE AND DATA RECEPTION METHOD**

(30) Priority: 23.08.2002 JP 2002242946
(71) Applicant: MATSUSHITA ELECTRIC INDUSTRIAL CO., LTD., Kadoma-shi, Osaka 571-8501 (JP)
(72) Inventor: SAITO, Yoshiko, Yokosuka-shi, Kanagawa 239-0806 (JP)
(74) Representative: Grünecker, Kinkeldey, Stockmair & Schwanhäusser Anwaltssozietät
(86) International application number: PCT/JP2003/010039
(87) International publication number: WO 2004/019514

(57) **Abstract**

A data receiving apparatus capable of minimizing data reception errors. In this apparatus, antenna 110 receives an RF signal and generates a received signal. Radio processor 120 performs frequency conversion processing upon the received signal. Received signal memory 130 stores the received signal thus frequency converted. Propagation path estimator 140 estimates propagation path characteristics from the stored received signal. SNR estimator 160 calculates the likelihood of the received signal using the received signal, an estimated value of the propagation path characteristics and a known signal stored in TSC memory 150. Viterbi equalizer 170 performs Viterbi equalization processing upon the received signal by using an estimated value of the propagation path characteristics and thereby generates demodulated data. Soft decision data generator 180 multiplies the likelihood by the demodulated data and thereby generates soft decision data. Channel code processor 190 performs channel decode processing upon the soft decision data.

## Description

### Technical Field

The present invention relates to a data receiving apparatus and a data receiving method.

### Background Art

In a mobile communication system where data is transmitted at high speed, a propagation signal is affected by an obstacle that exists on a propagation path between a base station and a mobile station (referred to as "multipath environment"). Generally, when the mobile station moves at high speed under multipath environment, the characteristic of the propagation path is deteriorated remarkably. Therefore, in the mobile communication system, a data receiving technique for correcting errors in data reception accompanied by the deterioration of the propagation path characteristics, is strongly desired.

A conventional data receiving apparatus is described in Japanese Patent Publication No.HEI06-140951. This data receiving apparatus is a kind of data receiving apparatus applied to a GSM (Global Systems for Mobile communications) system which is adopted in mobile communication systems in Europe.

In this data receiving apparatus, a known signal interval that exists in the center of the slot of a received signal is detected by determining correlation with a known signal stored in advance. Subsequently, the data receiving apparatus calculates impulse response of the propagation path by the least mean square method, using the known signal interval thus detected. Then, the data receiving apparatus performs Viterbi equalization processing upon the data contained in the received signal by using the impulse response, thereby generates demodulated data, and performs channel decode processing upon the demodulated data.

However, in such a conventional data receiving apparatus described above, the demodulated data is hard decision data decided without taking the reliability of the received signal into consideration. Therefore, only the hard decision data is used in the channel decode processing, thus posing a problem that erroneously decided data stays erroneous data and is subjected to the channel decode processing. In other words, there are a limit in reducing an error rate after the channel decode processing, and therefore the conventional data receiving apparatus poses a problem that many errors are generated in receiving data.

### Disclosure of the Invention

An object of the present invention is to provide a data receiving apparatus and a data receiving method capable of minimizing data reception errors.

According to one aspect of the present invention, a data receiving apparatus is provided, and this apparatus has an estimator that estimates characteristics of a propagation path, a calculator that calculates the likelihood of a received signal based on the propagation path characteristics estimated by the estimator, an equalization processor that performs equalization processing upon the received signal, and a generator that generates soft decision data based on the likelihood calculated by the calculator and the output of the equalization processor.

According to another aspect of the present invention, a data receiving method is provided, and this method includes an estimation step of estimating characteristics of a propagation path, a calculation step of calculating the likelihood of a received signal based on the propagation path characteristics estimated in the estimation step, an equalization processing step of performing equalization processing upon the received signal, and a generation step of generating soft decision data based on the likelihood calculated in the calculation step and the output of the equalization processing step.

### Brief Description of the Drawings

FIG.1 is a block diagram showing the configuration of a data receiving apparatus according to Embodiment 1 of the present invention;
FIG.2 is a block diagram showing an example of the specific configuration of an SNR estimator of the data receiving apparatus according to Embodiment 1 of the present invention;
FIG.3 is a view showing a frame configuration of a signal used in a mobile communication system of a GSM scheme where the data receiving apparatus according to Embodiment 1 of the present invention is used;
FIG.4 is a block diagram showing the configuration of the data receiving apparatus according to Embodiment 2 of the present invention;
FIG.5 is a block diagram showing an example of the specific configuration of the SNR estimator of the data receiving apparatus according to Embodiment 2 of the present invention; and
FIG.6 is a block diagram showing an example of the specific configuration of the SNR estimator of the data receiving apparatus according to Embodiment 2 of the present invention.

### Best Mode for Carrying out the Invention

A gist of the present invention is to use an estimated value of propagation path characteristics of a received signal as likelihood and multiply the output of an equalizer of the received signal with the likelihood and thereby generate soft decision data.

Preferred embodiments of the present invention will be explained in detail with reference to the attached drawings below.

### (Embodiment 1)

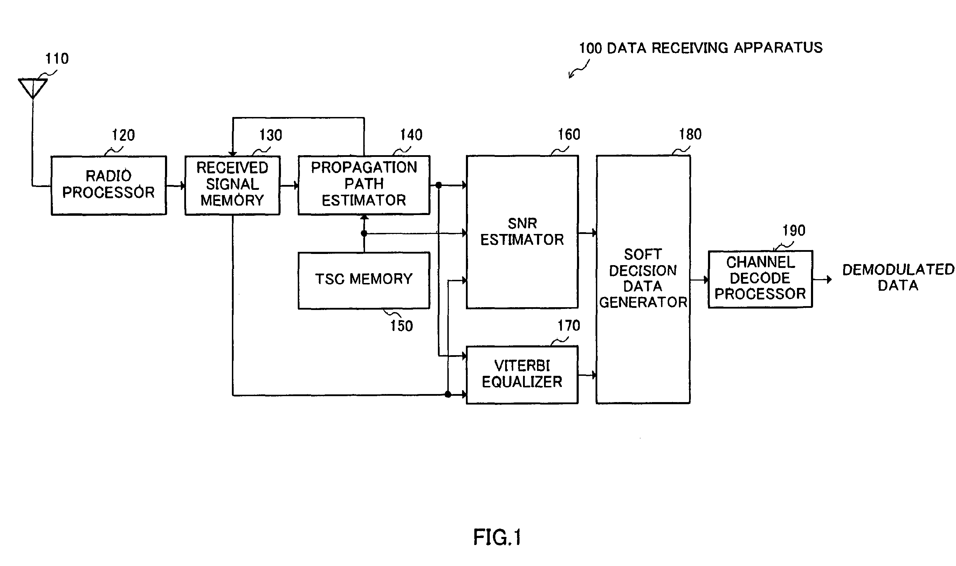

FIG.1 is a block diagram showing the configuration of a data receiving apparatus according to Embodiment 1 of the present invention.

Data receiving apparatus 100 shown in FIG.1 has antenna 110, radio processor 120, received signal memory 130, propagation path estimator 140, TSC memory 150, SNR estimator 160, Viterbi equalizer 170, soft decision data generator 180, and channel decode processor 190.

Referring to FIG.1, radio processor 120 has an input terminal connected to antenna 110. Received signal memory 130 has input terminals connected to radio processor 120 and propagation path estimator 140. Propagation path estimator 140 has input terminals connected to received signal memory 130 and TSC memory 150. SNR estimator 160 has input terminals connected to received signal memory 130, propagation path estimator 140, and TSC memory 150. Viterbi equalizer 170 has input terminals connected to received signal memory 130 and propagation path estimator 140. Soft decision data generator 180 has input terminals connected to SNR estimator 160 and Viterbi equalizer 170. Channel decode processor 190 has an input terminal connected to soft decision data generator 180.

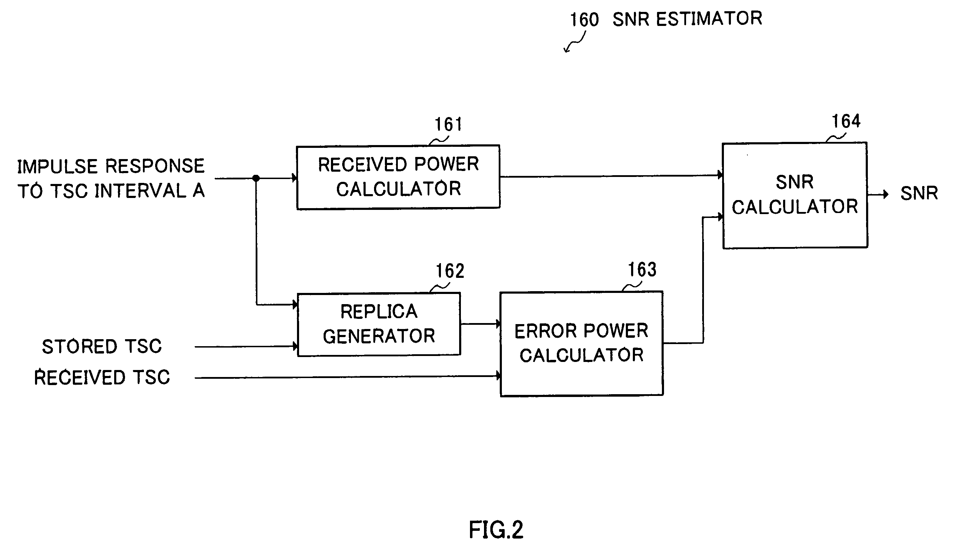

A specific example of the configuration of SNR estimator 160 shown in FIG.1 is shown in FIG.2.

SNR estimator 160 shown in FIG.2 has received power calculator 161, replica generator 162, error power calculator 163, and SNR calculator 164.

Referring to FIG.2, received power calculator 161 has an input terminal connected to propagation path estimator 140. Replica generator 162 has input terminals connected to propagation path estimator 140 and TSC memory 150. Error power calculator 163 has input terminals connected to replica generator 162 and received signal memory 130. SNR calculator 164 is connected to received power calculator 161 and error power calculator 163. SNR calculator 164 has an output terminal connected to soft decision data generator 180.

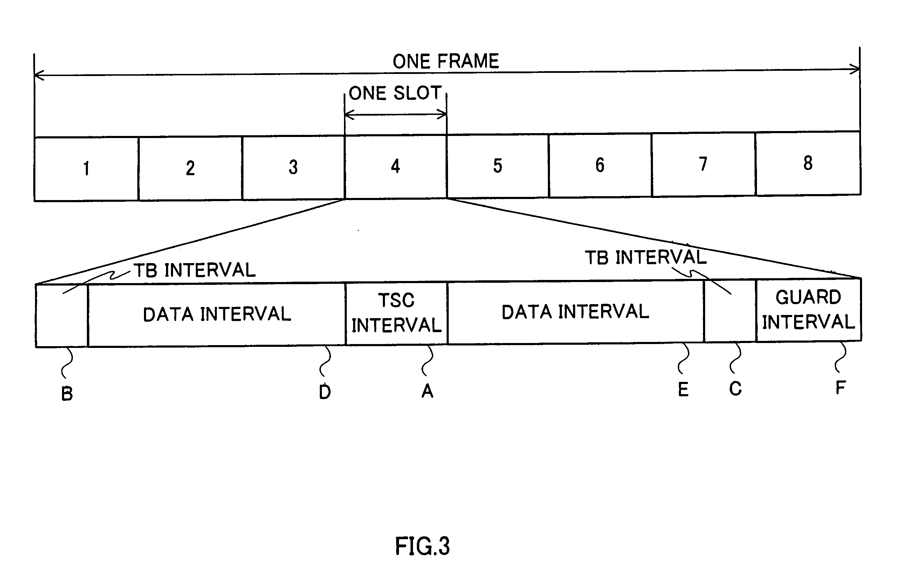

A case will be described here with Embodiment 1 where data receiving apparatus 100 with the above configuration is applied to a mobile communication system of GSM scheme. Now, the frame configuration of signals that data receiving apparatus 100 applied to the mobile communication system of GSM scheme receive will be described with reference to FIG.3.

FIG.3 is a diagram showing the frame configuration of signals for use in the mobile communication system where the data receiving apparatus of Embodiment 1 of the present invention is used.

A received signal, as shown in FIG.3, is formed with a sequence of TDMA frames having a predetermined time length. A TDMA frame is formed with a predetermined number of (8, for example) slots all having the same time length and configuration. A slot is formed with training sequence code (hereinafter "TSC") interval A, tail bit (hereinafter "TB") intervals B and C, data intervals D and E, and guard interval F.

TSC interval A, positioned in the center of the slot, contains a TSC, which refers to a known signal having a predetermined code length (for example, 26 bits). TB intervals B and C, positioned at the front end and at the rear end of the slot, respectively, each contains a TB, which refers to a known signal having a predetermined code length (for example, 3 bits). Data interval D, positioned between TB interval B and TSC interval A, contains data that is to be decoded. Data interval E, positioned between TSC interval A and TB interval C, contains data that is to be decoded. Guard interval F, positioned at the back of TB interval C, represents a border with the following slot.

Next, an operation of data receiving apparatus 100 with the above configuration will be described with reference to FIG.1.

First, antenna 110 receives the RF (Radio Frequency) signal having the frame configuration shown in FIG.3, and generates a received signal. Radio processor 120 performs frequency conversion processing from an RF signal into a baseband signal, upon the received signal generated in antenna 110. Received signal memory 130 stores the frequency-converted received signal.

Using the received signal stored in received signal memory 130, propagation path estimator 140 estimates propagation path characteristics. More specifically, propagation path estimator 140 finds correlation between the received signal and the TSC stored in TSC memory 150 in advance (hereinafter "stored TSC"), and thereby detects the TSC contained in TSC interval A of one slot in the received signal (hereinafter "received TSC") and calculates an impulse response to TSC interval A. In addition, propagation path estimator 140 outputs the calculated impulse response to SNR estimator 160 and Viterbi equalizer 170, and furthermore returns synchronization information acquired by the received TSC detection to received signal memory 130.

Received signal memory 130 outputs the stored received signal to SNR estimator 160 and Viterbi equalizer 170 with the synchronization information returned from propagation path estimator 140.

Using the received TSC in the received signal (i.e. the received signal in the TSC interval) output from received signal memory 130 with the synchronization information, the impulse response to TSC interval A, and the stored TSC, SNR estimator 160 estimates the reception quality (for example, the signal-to-noise ratio) as a likelihood of TSC interval A.

Now, the estimation of the signal-to-noise ratio (SNR: Signal-to-Noise Ratio), which is one reception quality indicator at SNR estimator 160, will be explained with reference to FIG.2.

Using the impulse response to TSC interval A, received power calculator 161 calculates received power. Using the impulse response to TSC interval A and the stored TSC, replica generator 162 generates a replica of the received signal. Error power calculator 163 calculates error power between the generated replica and the received TSC. SNR calculator 164 divides the received power calculated at received power calculator 161 by the error power calculated at error power calculator 163, and thereby calculates the signal-to-noise ratio of TSC interval A.

Using the impulse response to TSC interval A acquired from propagation path estimator 140, Viterbi equalizer 170 performs Viterbi equalization processing upon the data contained in data intervals D and E in the received signal output from received signal memory 130 with the synchronization information, and generates the demodulated data.

Using the signal-to-noise ratio of TSC interval A estimated at SNR estimator 160 as the likelihood of the received signal in the slot where TSC interval A belongs, soft decision data generator 180 multiplies the likelihood by the demodulated data generated at Viterbi equalizer 170, and thereby generates the soft decision data of the demodulated data of this slot.

Using the soft decision data, channel decode processor 190 performs channel decode processing, and generates and outputs the decoded data.

Data receiving apparatus 100 repeats the above-described operations on a per slot basis.

Incidentally, the internal configuration of SNR estimator 160 and the signal-to-noise ratio estimation method are by no means limited to the ones described above. Other estimation methods may include, for example, the method that calculates the tap coefficients for Viterbi equalizer 170 by using the impulse response acquired at propagation path estimator 140 and by using, for example, adaptive algorithm such as the least mean square method, and that divides power of these tap coefficients by calculated error power of these coefficients and thereby calculates the signal-to-noise ratio.

Moreover, although Embodiment 1 has been described in conjunction with data receiving apparatus 100 applied to a mobile communication system of GSM scheme, by using known signal interval for synchronization processing equivalent to TSC interval A, the same above-described processings can be as well implemented in mobile communication system of other schemes.

Thus, according to Embodiment 1, data receiving apparatus 100 calculates the likelihood of the received signal based on estimated propagation path characteristics and generates the soft decision data based on the calculated likelihood of the received signal and the demodulated data, so that it is possible to multiply the output of Viterbi equalizer 170 (i.e. the demodulated data) with the likelihood of the received signal in accord with the propagation path characteristics and generate the soft decision data, perform channel decode processing upon this soft decision data, and minimize data reception errors.

In addition, according to Embodiment 1, likelihood is reception quality, so that it is possible to multiply the output of Viterbi equalizer 170 (i.e. the demodulated data) with the reception quality of a received signal as the likelihood, and generate the soft decision data.

Further, according to Embodiment 1, soft decision data generator 180 generates the soft decision data based upon the likelihood calculated based on the impulse response estimated by using the TSC on a per slot basis and the demodulated data, so that it is possible to multiply the output of Viterbi equalizer 170 (i.e. the demodulated data) with the likelihood in accord with the impulse response on a per slot basis, and generate the soft decision data.

Furthermore, according to Embodiment 1, likelihood is the ratio of the impulse response to the error power between the replica of the received signal and the received TSC, so that it is possible to multiply the output of Viterbi equalizer 170 (i.e. the demodulated data) with the signal-to-noise ratio in accord with the impulse response as the likelihood on aper slot basis, and generate the soft decision data.

### (Embodiment 2)

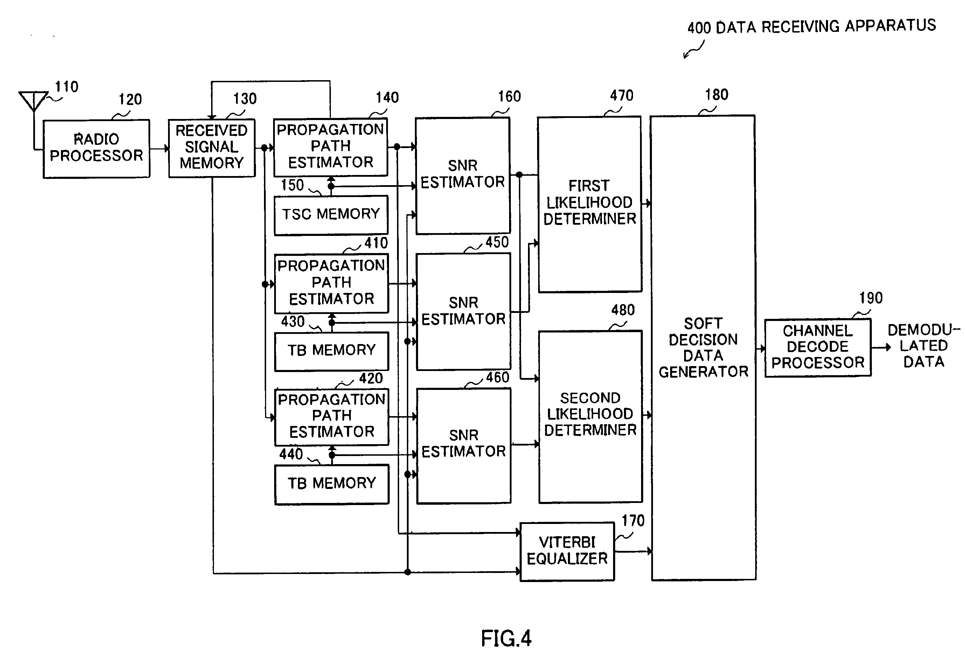

FIG. 4 is a block diagram showing the configuration of a data receiving apparatus according to Embodiment 2 of the present invention. Incidentally, the configuration of data receiving apparatus 400 shown in FIG.4 is basically the same as that of the data receiving apparatus 100 shown in FIG.1, therefore the same reference signs and numerals are given to the same configuration element, and the explanation thereof will be omitted here.

According to Embodiment 2, the data receiving apparatus 400 has a plurality of systems for probability estimation (specifically, a propagation path estimator and an SNR estimator), and estimate the likelihoods of the slots of the received signal in accordance with fluctuations in propagation path characteristics, and generates the soft decision data by using these likelihoods.

The data receiving apparatus 400 shown in FIG.4 has antenna 110, radio processor 120, received signal memory 130, propagation path estimators 140, 410, and 420, TSC memory 150, TB memories 430 and 440, SNR estimators 160, 450, and 460, Viterbi equalizer 170, first likelihood determiner 470, second likelihood determiner 480, soft decision data generator 180, and channel decode processor 190.

Referring to FIG. 4, radio processor 120 has an input terminal connected to antenna 110. Received signal memory 130 has input terminals connected to radio processor 120 and propagation path estimator 140. Propagation path estimator 140 has input terminals connected to received signal memory 130 and TSC memory 150. Propagation path estimator 410 has input terminals connected to received signal memory 130 and TB memory 430. Propagation path estimator 420 has input terminals connected to received signal memory 130 and TB memory 440. SNR estimator 160 has input terminals connected to received signal memory 130, propagation path estimator 140, and TSC memory 150. SNR estimator 450 has input terminals connected to received signal memory 130, propagation path estimator 410, and TB memory 430. SNR estimator 460 has input terminals connected to received signal memory 130, propagation path estimator 420, and TB memory 440. Viterbi equalizer 170 has input terminals connected to received signal memory 130 and propagation path estimator 140. First likelihood determiner 470 has input terminals connected to SNR estimator 160 and SNR estimator 450. Second likelihood determiner 480 has input terminals connected to SNR estimator 160 and SNR estimator 460. Soft decision data generator 180 has input terminals connected to first likelihood determiner 470 and second likelihood determiner 480. Channel decode processor 190 has an input terminal connected to soft decision data generator 180.

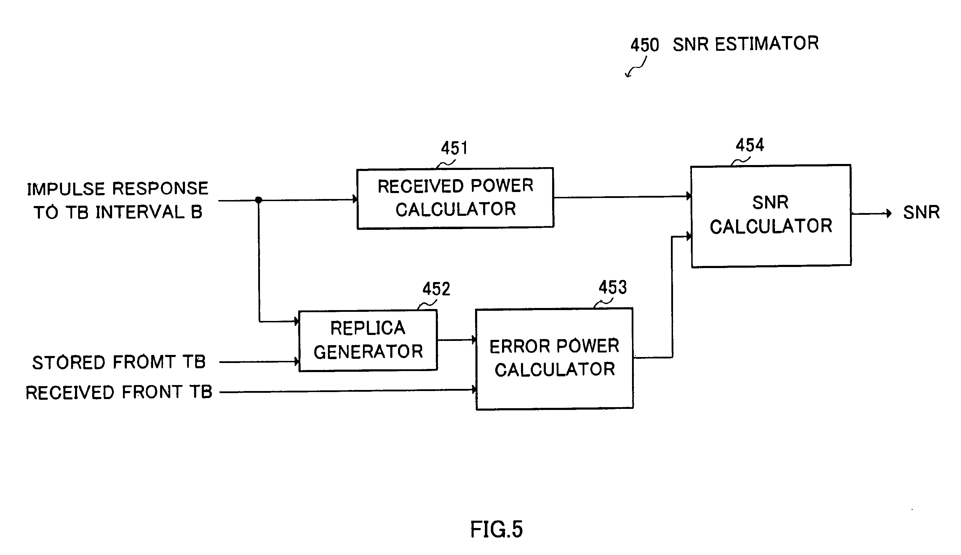

SNR estimator 450 shown in FIG.4 has the same configuration with that of SNR estimator 160, and an example of its specific configuration is shown in FIG.5.

SNR estimator 450 shown in FIG.5 has received power calculator 451, replica generator 452, error power calculator 453, and SNR calculator 454.

Referring to FIG.5, received power calculator 451 has an input terminal connected to propagation path estimator 410. Replica generator 452 has input terminals connected to propagation path estimator 410 and TB memory 430. Error power calculator 453 has input terminals connected to replica generator 452 and received signal memory 130. SNR calculator 454 has input terminals connected to received power calculator 451 and error power calculator 453. SNR calculator 454 has an output terminal connected to first likelihood determiner 470.

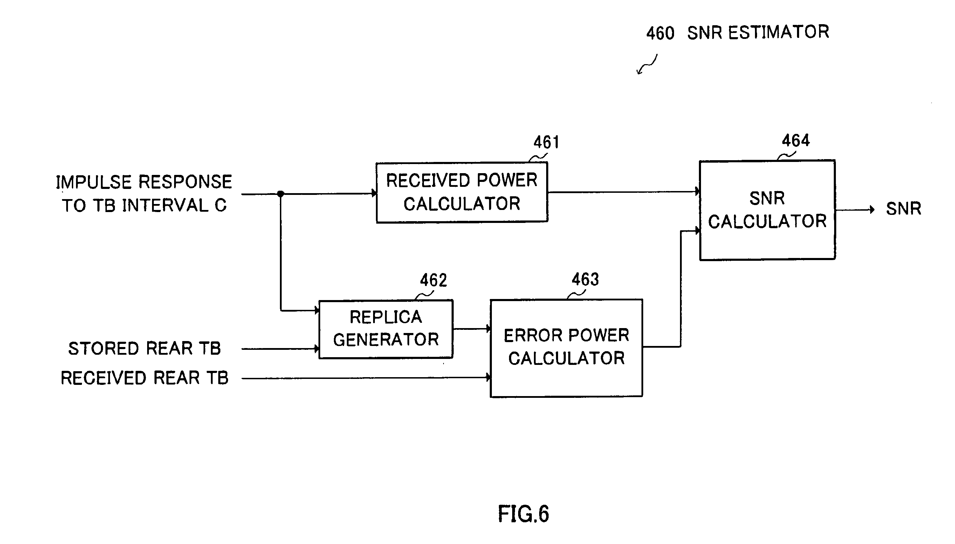

In addition, SNR estimator 460 shown in FIG.4 has the same configuration with that of SNR estimator 160 and SNR estimator 450, and an example of the specific configuration is shown in FIG.6.

SNR estimator 460 shown in FIG.6 has received power calculator 461, replica generator 462, error power calculator 463, and SNR calculator 464.

Referring to FIG.6, received power calculator 461 has an input terminal connected to propagation estimator 420. Replica generator 462 has input terminals connected to propagation path estimator 420 and TB memory 440. Error power calculator 463 has input terminals connected to replica generator 462 and received signal memory 130. SNR calculator 464 has input terminals connected to received power calculator 461 and error power calculator 463. SNR calculator 464 has an output terminal connected to second likelihood determiner 480.

Next, the operation of data receiving apparatus 400 with the above configuration will be described.

Antenna 110 generates the received signal by receiving a RF (Radio Frequency) signal having a frame configuration shown in FIG.3. Radio processor 120 performs upon the received signal a frequency conversion processing from the RF signal to a base band signal. Received signal memory 130 stores the frequency-converted received signal.

Propagation path estimator 140 calculates an impulse response to TSC interval A as propagation path characteristics in the same manner as Embodiment 1. In addition, propagation path estimator 140 outputs the calculated impulse response to TSC interval A to SNR estimator 160 and Viterbi equalizer 170, and furthermore returns synchronization information acquired by the received TSC detection to received signal memory 130.

Propagation path estimator 410 estimates the propagation path characteristics according to the procedure similar to propagation path estimator 140 by using the received signal stored in received signal memory 130. More specifically, propagation path estimator 410 finds correlation between the received signal and a TB stored in TB memory 430 in advance and corresponding to TB interval B of the front of the slot (hereinafter "stored front TB"), and thereby detects the TB contained in TB interval B (hereinafter "received front TB") and calculates an impulse response to TB interval B. Then, propagation estimator 410 outputs the calculated impulse response to TB interval B to SNR estimator 450.

Using the received signal stored in the received signal memory 130, according to the procedure similar to the propagation path estimators 140 and 410, propagation path estimator 420 estimates the propagation path characteristics. More specifically, propagation path estimator 420 finds correlation with a TB stored in TBmemory 440 in advance and corresponding to TB interval C of the slot rear (hereinafter "stored rear TB"), and thereby detects the TB contained in TB interval C (hereinafter "received rear TB") and calculates the impulse response to TB interval C. Then, propagation path estimator 420 outputs the calculated impulse response to TB interval C to SNR estimator 460.

Received signal memory 130 outputs the stored received signal to SNR estimators 160, 450, and 460, and Viterbi equalizer 170, together with the synchronization information returned from propagation path estimator 140.

SNR estimator 160 calculates the signal-to-noise ratio (hereinafter "TSC-SNR"), which is one reception quality indicator, as a likelihood of TSC interval A of the slot in the received signal, in the same manner as in Embodiment 1. In Embodiment 2, SNR estimator 160 outputs the TSC-SNR calculated to first likelihood determiner 470 and second likelihood determiner 480.

According to the procedure similar to SNR estimator 160, SNR estimator 450 estimates the reception quality (for example, the signal-to-noise ratio) as a likelihood of TB interval B by using the received front TB (the received signal at the front TB interval) in the received signal which is output from received signal memory 130 together with the synchronization information, the impulse response to TB interval B and the stored front TB.

Here, the estimation of the signal-to-noise ratio, which is one reception quality indicator at SNR estimator 450, will be explained with reference to FIG.5.

Using the impulse response to TB interval B, received power calculator 451 calculates the received power. Using the impulse response to TB interval B and the stored front TB, replica generator 452 generates a replica of the received signal. Error power calculator 453 calculates the error power between the replica generated at replica generator 452 and the received front TB. SNR calculator 454 divides the received power calculated at received power calculator 451 by the error power calculated at error power calculator 453, and thereby calculates the signal-to-noise ratio of TB interval B (hereinafter "front TB-SNR"). Then, SNR calculator 454 outputs the calculated front TB-SNR to first likelihood determiner 470.

SNR estimator 460 estimates the reception quality (for example, the signal-to-noise ratio) as a likelihood of TB interval C by using the received rear TB (the received signal in the rear TB interval) in the received signal output from received signal memory 130 together with the synchronization information, the impulse response to the TB interval C, and the stored rear TB.

Here, the estimation of the signal-to-noise ratio, which is one reception quality indicator in SNR estimator 460, will be described with reference to FIG.6.

Using the impulse response to TB interval C, received power calculator 461 calculates the received power. Using the impulse response to TB interval C and the stored rear TB, replica generator 462 generates the replica of the received signal. Error power calculator 463 calculates the error power between the replica generated at replica generator 462 and the received rear TB. SNR calculator 464 divides the received power calculated at received power calculator 461 by the error power calculated at error power calculator 463, and thereby calculates the signal-to-noise ratio (hereinafter "rear TB-SNR") of TB interval C. Then, SNR calculator 464 outputs the calculated rear TB-SNR to second likelihood determiner 480.

Using the impulse response to TSC interval A acquired from propagation path estimator 140, Viterbi equalizer 170 performs Viterbi equalization processing upon the data contained in data intervals D and E in the received signal outputted from received signal memory 130 together with the synchronization information, and generates the demodulated data.

Using the TSC-SNR and the front TB-SNR, first likelihood determiner 470 determines the first likelihood of data interval D positioned between TB interval B and TSC interval A.

Here, the first likelihood determination method at first likelihood determiner 470 will be described. First, first likelihood determiner 470 calculates the difference between the TSC-SNR and the front TB-SNR. Subsequently, first likelihood determiner 470 compares the absolute value of the calculated difference to the threshold value stored in advance. Then, when the absolute value is smaller than the threshold value, first likelihood determiner 470 determines the TSC-SNR as the first likelihood of data interval D. Meanwhile, when the absolute value is larger than the threshold value, first likelihood determiner 470 assigns the front TB-SNR to the front half of data interval D and the TSC-SNR to the rear half of data interval D, respectively, and thereby determines the combination of these two signal-to-noise ratios as the first likelihood.

Using the TSC-SNR and the rear TB-SNR, second likelihood determiner 480 determines the second likelihood of data interval E positioned between TSC interval A and TB interval C.

Here, the second likelihood determination method at second likelihood determiner 480 will be described. First, second likelihood determiner 480 calculates the difference between the TSC-SNR and the rear TB-SNR. Subsequently, second likelihood determiner 480 compares the absolute value of the calculated difference to the above-described threshold value. Then, when the absolute value is smaller than the threshold value, second likelihood determiner 480 determines the TSC-SNR as the second likelihood of data interval E. Meanwhile, when the absolute value is larger than the threshold value, second likelihood determiner 480 assigns the TSC-SNR to the front half of data interval E, and the front TB-SNR to the rear half of data interval E, and thereby determines the combination of these two signal-to-noise ratios as the second likelihood.

Soft decision data generator 180 multiplies the first likelihood determined at first likelihood determiner 470, and the second likelihood determined at second likelihood determiner 480, by the demodulated data generated at Viterbi equalizer 170, and thereby generates the soft decision data of the demodulated data of the slot.

Channel decode processor 190 performs channel decode processing by using the soft decision data, and outputs the demodulated data acquired by the channel decode processing.

Data receiving apparatus 400 repeats the above-described operation on a per slot basis.

Incidentally, in Embodiment 2, three likelihoods are calculated from three known signal intervals in the slot (that is, TSC interval A and TB intervals B and C). However, the number of known signal intervals for use is not limited to three, and the likelihood of the same number can be calculated by using an arbitrary number of the known signal intervals.

Also, in Embodiment 2, a plurality of likelihoods calculated at first likelihood determiner 470 and second likelihood determiner 480 are assigned to two intervals or four intervals in the slot, and one or more likelihoods with which the demodulated data is multiplied are determined. However, the configuration and method of this determination are not limited to those described above, and a plurality of likelihoods may be assigned to an arbitrary number of intervals.

Also, as with the threshold value used in the likelihood determination processing at first likelihood determiner 470 and second likelihood determiner 480, more effective likelihood can be determined by adopting an optimal threshold value according to the simulation evaluation or the like.

Also, in Embodiment 2, in the same manner as Embodiment 1, explanation was given to data receiving apparatus 400 applied to the mobile communication system of GSM scheme. However, in the mobile communication system adopting another scheme, the processing can be implemented in the same manner as that described above, by using a plurality of known signal intervals in one slot.

As described above, according to Embodiment 2, soft decision data generator 180 generates the soft decision data on a per slot basis based on the TSC, the TSC estimated by using the front TB and the rear TB, the TSC calculated based on impulse responses corresponding to the front TB and the rear TB respectively, and a plurality of likelihoods corresponding to the impulse responses of the front TB and the rear TB, and the demodulated data. Therefore, the output (demodulated data) of Viterbi equalizer 170 is multiplied with the likelihood in accordance with fluctuations in the impulse response in the slot on a per slot basis, and thereby the soft decision data can be generated.

Also, according to Embodiment 2, the likelihood is a power ratio of the impulse response to the error power between the replica of the received signal acquired by using the impulse response and the known signal corresponding to the replica. Therefore, the output of Viterbi equalizer 170 (demodulated data) is multiplied with a plurality of the signal-to-noise ratios as the likelihood in accordance with fluctuations of the impulse response in the slot on a per slot basis, and thereby the soft decision data can be generated. As described above, according to the present invention, the estimated value of the propagation path characteristics of the received signal is used as the likelihood, and the output of the equalizer of the received signal is multiplied by the likelihood, and thereby the soft decision data is generated. Therefore, data reception errors can be minimized.

The present application is based on Japanese Patent Application No.2002-242946 filed on August 23, 2002, entire content of which is expressly incorporated herein by reference.

### Industrial Applicability

The present invention is useful as a data receiving apparatus and a data receiving method used in a mobile communication system where a GSM scheme is applied.

## Claims

1. A data receiving apparatus comprising:
an estimator that estimates characteristics of a propagation path;
a calculator that calculates a likelihood of a received signal based on the propagation path characteristics estimated by the estimator;
an equalization processor that performs equalization processing upon the received signal; and
a generator that generates soft decision data based on the likelihood calculated by the calculator and an output of the equalization processor.

2. The data receiving apparatus according to claim 1, wherein the likelihood is a reception quality.

3. The data receiving apparatus according to claim 1,
wherein the received signal comprises a plurality of slots each containing a known signal;
wherein the estimator estimates an impulse response on a per slot basis using the known signal contained in each slot of the received signal;
wherein the calculator calculates the likelihood on a per slot basis based on the impulse response; and
wherein the generator generates the soft decision data based on the likelihood calculated by the calculator on a per slot basis and the output of the equalization processor.

4. The data receiving apparatus according to claim 3, wherein the likelihood is a power ratio of the impulse response to an error power between a replica of the received signal and the received signal acquired using the impulse response, in a known signal interval.

5. The data receiving apparatus according to claim 1,
wherein the received signal comprises a plurality of slots each containing a plurality of known signals;
wherein the estimator estimates a plurality of impulse responses each corresponding to the plurality of known signals on a per slot basis, by using the plurality of known signals contained in each slot of the received signal;
wherein the calculator calculates a plurality of likelihoods each corresponding to the plurality of impulse responses based on the plurality of impulse responses on a per slot basis; and
wherein the generator generates the soft decision data based on the plurality of likelihoods calculated by the calculator on a per slot basis and the output of the equalization processor.

6. The data receiving apparatus according to claim 5, wherein the likelihood is a power ratio of the impulse response to an error power between a replica of the received signal and the received signal acquired using the impulse response, in a known signal interval.

7. A data receiving method, comprising:
an estimation step of estimating characteristics of a propagation path;
a calculation step of calculating a likelihood of a received signal based on the propagation path characteristics estimated in the estimation step;
an equalization processing step of performing equalization processing upon the received signal; and
a generation step of generating soft decision data based on the likelihood calculated in the calculation step and an output of the equalization processing step.
